Europäisches Patentamt

European Patent Office

Office européen des brevets

(11) Publication number: **0 150 438**
A2

# (12) EUROPEAN PATENT APPLICATION

(21) Application number: **84115725.8**

(22) Date of filing: **18.12.84**

(51) Int. Cl.⁴: **C 22 B 7/00**, C 22 B 34/22, C 22 B 23/02

(30) Priority: **30.12.83 US 567289**

(43) Date of publication of application: **07.08.85**
**Bulletin 85/32**

(84) Designated Contracting States: **DE FR GB IT NL**

(71) Applicant: **STAUFFER CHEMICAL COMPANY, Westport Connecticut 06880 (US)**

(72) Inventor: **Carron, Mark Stuart, 87 Westfield Drive, Trumbull, Connecticut 06611 (US)**

(74) Representative: **Jaeger, Klaus, Dr.rer.nat. Dipl.-Chem. et al, Jaeger, Grams & Pontani Patentanwälte Bergstrasse 48 1/2, D-8035 München-Gautlng (DE)**

(54) Method of recovering valuable metals from waste materials, particularly from spent petroleum cracking catalysts.

(57) The invention is directed to a process of treating waste materials, particularly petroleum cracking catalyst waste containing contaminating and/or valuable metals to decontaminate the waste and/or recover the metals therefrom which process comprises the reduction of the metals contained in the waste in the presence of a slag former such as a silica-alumina composite, a flux such as a Group IA or IIA oxide and a phosphate containing compound. The metals are recovered as metals or metal phosphides in a distinct ferrophos layer. The accumulated metals can be further processed to recover the metal content thereof. The process parallels the electrothermal process for producing phosphorus which is desirably utilized as disclosed herein to recover valuable Group VB to Group VIII metals.

TREATMENT FOR SPENT
PETROLEUM CRACKING CATALYST

Background of the Invention

Petroleum cracking catalysts are extensively used
for converting heavy distillate to compounds of low
molecular weight.  During the process, the catalyst becomes covered with coke and other impurities and must
be regenerated to restore the activity of the catalyst.
In spite of regeneration, the lifetime of such catalysts
is limited due to the accumulation thereon of catalyst
poisons, primarily metals, i.e., vanadium and nickel.
Spent catalyst must periodically (or continuously) be
replaced by fresh catalyst.

Fresh cracking catalysts are generally aluminum
silicates in which a portion of the alumina (often
virtually all) has been leached out with alkali to produce the internal particle voids which are a key to
the catalyst activity.

The petroleum industry generates vast amounts of
the spent catalyst containing:  silica, alumina, carbon
(coke), nickel, vanadium, copper, tin, antimony, iron,
sodium, titanium, bismuth and other metals either as
oxides or sulfides, or mixtures thereof.  The spent
catalyst is considered a hazardous waste since it contains various contaminants such as nickel and vanadium.

Although spent catalyst contains relatively small
amounts of valuable metals, recovery of the metals is
important due to the short supply and high cost thereof.
The vanadium, in particular,  has value as no natural
concentrations seem to exist.  The metal-containing

C-7032

catalyst must be disposed of under controlled conditions, often in special dump sites, usually at considerable expense. However, special dumping is not required for substantially metal-free catalyst waste.

Bulk landfill disposal of the waste is a costly means of treating the generated waste.

Many methods of recovering valuable metals from catalytic wastes are known. These prior known methods often require oxidative roasting of catalyst prior to metal recovery.

One such method is described in German Offenleg-ungsschrift No. 25 56 247 as well as U.S. Patent No. 4,087,510. In this process, spent desulfurization catalysts are calcined in the presence of alkali salts, preferably soda, whereby metal oxides are converted into water-soluble alkali metal salts. Water-soluble vanadium and molybdenum salts are then obtained by leaching the residue with hot water, but cobalt is generally not recoverable. Satisfactory yields of cobalt can only be obtained if the carrier material, to which cobalt oxide is bound as spinel, is completely dissolved.

Calcining of desulfurization catalyst in the presence of soda results in the formation of water-soluble alkali aluminates. Alkali silicates are also formed. Therefore, various impure metal salt solutions are obtained. Such solutions must be processed further as by precipitation of the aluminates and silicates leading to considerable losses of molybdenum and vanadium.

Wet chemical methods are known in which spent desulfurization catalyst is treated with aqueous alkaline media without calcining in order to solubilize contaminated alkali molybdate or alkali vanadate salts. For example, in German Offenlegungsschrift No. 27 35 684, an aqueous sodium carbonate solution is used. In U.S. Patent No. 3,567,433, dissolution of molybdenum, vanadium and nickel salts is carried out in a pressurized autoclave in the presence of ammonia or ammonium carbonate. The eluted metal salts may then be subjected to further processing.

U.S. Patent No. 4,384,885 discloses a process for the recovery of metals for spent desulfurization catalyst. The process comprises thermally reducing the catalyst in the presence of carbon and calcium oxide.

The waste treated in the references are desulfurization wastes in general and are not the types of waste intended to be treated in the present invention. Desulfurization catalytic waste can, however, be treated in the manner disclosed herein if previously treated to remove substantially all the sulfur contaminant.

In the manufacture of elemental phosphorus from fluoroapatite ores, fluoroapatite is mixed with coke and silica to produce phosphorus, CO, and slag. The silica is required as a fluxing agent to convert the otherwise refractory CaO to $CaSiO_3$ which has a considerably lower melting point. Alumina, although not necessarily as effective as silica, can also serve as a fluxing agent forming $Ca_3(AlO_3)_2$. Mixed (CaO)$(Al_2O_2)(SiO_2)$ compounds are well known. Within the industry it has been well known that trace metals (mainly iron) react under the furnace conditions to produce a second liquid phase in the furnace with the

general composition $Fe_xP$, called ferrophos. Selectivity of iron to the ferrophos phase is extremely high (relative to the slag, i.e., 1000:1). Ore impurities vary depending upon the source of the ores. In western rock vanadium, nickel and chrome often appear. Those metals also collect in the ferrophos. Ferrophos is sold to the iron and steel industry as a source of phosphorus for specialty steels. Western ferrophos is sometimes sold for vanadium recovery depending on market conditions. Vanadium recovery is most often via wet processing.

Summary of the Invention

The invention is particularly directed to a method of recovering metals from materials or waste containing such metals or for decontaminating waste material containing metals, which method comprises treating the waste with a Group IA or IIA oxide and/or a slag forming composition which will form a melt with the Group IA or IIA oxide; carbon and a phosphate in a reduction process which results in the metals becoming a part of ametal containing phosphide layer. Another aspect of the invention is the treatment of waste petroleum cracking catalyst which treatment comprises utilizing the waste catalyst, which is comprised of a silica/alumina matrix, to replace part or all of the silica used in the electrothermal method of manufacturing elemental phosphorus. The waste material in the method disclosed would be charged to the phosphorus furnace in amounts based on the silica and alumina contents as a flux/
slag former, the metals content thereof being recovered
as part of the ferrophosphorus layer.

## Detailed Description of the Invention

The process of the invention is a method of separating Groups VB, VIB, VIIB and Group VIII metals (hereinafter Group VB to Group VIII) of the Periodic Table of Elements from wastes or other materials containing such metals in a matrix. The process also comprises the use of Group IA and IIA oxides in combination with phosphorus or phosphates in a reaction to produce as reaction products a slag and a metal containing phosphide layer which phosphides can be easily separated from other reaction products. Iron or other inexpensive Group VB to Group VIII metals, if not present or present in only negligible amounts, can be used as chasers or accumulators to improve recovery.

The invention is more particularly directed to the recovery of Group VB to Group VIII metals from waste by utilizing the waste in the electrothermal process for producing phosphorus as a slag former and flux.

In the electrothermal process of manufacturing elemental phosphorus, silica and lumina act as a flux and strong acid at temperatures of 2,700-3,200°F. (1480°C. - 1760°C.) to attack the fluorapatite crystal and release $P_2O_5$ for reduction by carbon.

In the electrothermal process, the raw materials (phosphate rock, silica and coke) are charged to the furnace. Silica is used as a flux for the calcium present in the phosphate rock. Coke is charged to a level necessary to immerse the heated coke between the electrodes at the whole depth of the melt of phosphate and silica charge. Phosphorus is reduced in the electrothermal furnace with the formation of furnace gases containing carbon monoxide. The resulting phosphorus in the gaseous state is removed from the electrothermal furnace for condensation. Slag and ferrophosphorus formed during the reduction of the charge are discharged from the furnace through appropriately located tap holes.

Silica utilized in the above process must be high in $SiO_2$ and low in impurities such as lime and iron oxides, as these contaminants increase the power required to melt the burden and increase loss of phosphorus due to the formation of excess amounts of slag and ferrophosphorus metal.

In the instant process, therefore, it is prudent but not necessary to insure that the spent catalysts contain minimum amounts of these contaminants, as obviously there are tradeoffs between the power used and alternate disposal costs. In addition, it is desirable to avoid the introduction of certain heavy metals such as arsenic, antimony, etc., as impurities of the waste catalytic material since such materials are known to be volatile and cause contamination of the elemental phosphorus product of the electrothermal process.

In the process as disclosed herein the higher boiling metals upon reduction from the waste catalyst pass through the slag and collect as a molten pool of ferrophosphorus at the bottom of the furnace. Metals, mainly vanadium and nickel, thereby, would become part of the ferrophos layer suitable as pre-alloy in steel making or for separation into its valuable metallic components.

Since the catalyst is to be used as a flux in the electrothermal production of elemental phosphorus, amounts of the catalyst suitable for use should be calculated to generally supply a ratio of from about 0.6 to about 1.4 (by weight) $SiO_2$ to Group IA or IIA oxide.

In all aspects of the invention as with the electrothermal process for producing phosphorus it is desirable to balance the Group IA or IIA oxide with a sufficient amount of the flux composition to insure the formation of a low melting point mixture. Therefore, in replacing silica in the furnace process with a silica containing waste material, the waste can be used to replace from 0 to 100% of the silica necessary for the process depending on the silica content of the other raw materials utilized. Typically up to 1.4 tons of cracking catalyst per ton of $P_4$ can be utilized but the stated amount depends on the silica content of the phosphate ore utilized.

In the practice of the invention the spent catalyst can be added with the phosphate as it enters the nodulizing kiln and made a part of the phosphate nodule or the spent catalyst can be briquetted or pelletized and added to the process in the usual manner.

The invention is also a method of recovering metal values from waste materials particularly silica-alumina containing waste by essentially paralleling the electrothermal process in that a $SiO_2/Al_2O_3$ composition (a slag former) and/or a Group I or II oxide,preferably CaO, are used in a reduction process to recover metals of Group VB to VIII.

It is necessary in the process of the invention to free the metal from the waste by forming a melt. In the furnace process for the manufacture of phosphorus, for instance, the melt is formed by the addition of silica which serves as an acid and a flux (slag former) to react with the CaO of the apatite and release the $P_2O_5$ content for reaction with carbon. Similarly, the invention comprises treatment of metal containing materials with a Group IA or IIA oxide material, e.g., CaO and/or slag former preferably $SiO_2$ or an alumina-silica matrix which will form a melt by reaction with the Group IA or IIA oxide; and a phosphate or phosphorus containing material and carbon. The Group I or II oxide is used as a decontaminant (flux) in such a process. Where lime or other Group I or II oxides are present in the raw material or in the waste being treated no further amounts may be needed to form the melt necessary for separating the desired metals and the formation of a ferrophos layer. In such instances it is only necessary to add thereto a slag former ($SiO_2$ or a $SiO_2 \cdot Al_2O_3$ matrix) and the other ingredients to reduce the metals to their metallic form or as metal phosphides. As in the furnace process, phosphate and carbon (coke) are introduced to extract the metal oxides as metals and metal phosphides. Generally, iron will be present as a contaminant of

- 9 -

the waste or the added material. If not, the metals
would still accumulate in a separate layer as a metal
containing phosphide layer. Iron or other inexpensive
Group VB to VIII metals can be added as a layer former
(chaser) so that the metal containing phosphide now
termed a ferrophos layer, can be easily recovered by
further treatment to obtain the metal values therefrom.

The thermal reduction process disclosed will generally utilize temperature in the range utilized in
the electrothermal process. Suitable temperatures for
practicing the invention in its broadest scope are
temperatures at or above the melting point of the slag
formed.

Valuable metals such as vanadium, platinum, chromium, and nickel can be easily recovered from waste
materials by the process of the invention. Ferro
nickel, ferro vanadium and iron can always be recovered
as their mixed phosphides for direct use in steel
making. A method of dephosphorizating the ferrophos
is disclosed in U. S. Patent No. 3,699,213.

The invention additionally provides a means for treating contaminated waste material in an environmentally safe manner so as to render the waste after treatment safe for disposal.

Waste automotive ceramic honeycomb catalytic converters comprised of, for instance, mullite ($3Al_2O_3 \cdot 2SiO_2$) or cordierite ($2MgO \cdot 5SiO_2 \cdot 2Al_2O_3$) in a metal casing can be treated in the manner disclosed to recover not only the casing metal but to recover the spent catalytic metals, as for instance, ruthenium, rhodenium, palladium, osmium, irridium and platinum.

In the practice of the invention the waste materials should contain low sulfur levels of less than about 50% and preferably less than about 10% by weight. Sulfur reacts with phosphorus to produce volatile $P_2S_5$ which is a contaminant of $P_4$. In addition, in the electrothermal process conducted to produce high purity phosphorus the waste should contain low concentrations of metals which will volatilize with phosphorus. If, however, the process is utilized solely for decontaminating the waste, and not for the allied production of high purity phosphorus the presence of sulfur or such metals as, for instance, arsenic, antimony or mercury will not be a limiting factor. Where high quality phosphorus is a requirement of the overall electrothermal process the arsenic antimony and mercury should be limited to less than about .1% by weight.

What is Claimed is:

1. A method of recovering valuable metals from waste materials containing such metals comprising treating the waste in a reduction process wherein the waste is treated in the presence of a Group IA or IIA oxide or a slag former or both in conjunction with a phosphate containing composition and carbon to form a melt wherein the metals are reduced and are recoverable in a metal containing phosphide layer.

2. The method of Claim 1 wherein the metal recovered in the metal-containing phosphide layer is vanadium.

3. The method of Claim 1 wherein the metal recovered in the metal containing layer is nickel.

4. The method of Claim 1 wherein the oxide is calcium oxide.

5. The method of Claim 1 wherein the slag former is silica.

6. The method of Claim 1 wherein the slag former is a silica-alumina matrix.

7. The method of Claim 1 wherein the phosphate containing composition is fluoroapatite.

8. The method of Claim 1 wherein the waste material treated to recover metals therefrom is spent automotive ceramic honeycomb catalytic converter.

9. The method of Claim 8 wherein the waste contains platinum.

10. The method of Claim 1 further comprising addition of a Group VB to Group VIII metal to enhance the accumulation of the metals into a metal containing phosphide layer.

11. The method of Claim 10 wherein the metal is iron.

12. A method of treating waste catalytic cracking materials comprising a silica-alumina matrix by reducing the waste in the presence of a Group IA or IIA oxide, a phosphate containing compound and carbon at a temperature necessary to form a melt such that the metals contained in the waste are reduced and accumulate in a phosphide layer.

13. The method of Claim 12 further comprising treating the waste with a Group VB to VII metal to enhance the accumulation of the metals into the phosphide layer.

14. The method of Claim 13 wherein the metal is iron.

15. The process of Claim 12 wherein the catalytic waste is briquetted prior to use.

16. The process of Claim 12 wherein the catalytic waste is pelletized prior to use.

17. The process of Claim 12 wherein the waste is nodulized with the phosphate containing compound prior to use.

18. A method of recovering valuable Group VB to Group VIII metals comprising the process of Claim 1.

19. A method of recovering valuable Group VB to Group VIII metals in the melt comprising the process of Claim 12.

20. A process of recovering metals from spent catalytic cracking catalyst comprised of a silica-alumina material comprising subjecting the spent catalyst to a thermally reducing condition in the presence of a Group IA or IIA oxide, carbon and a phosphate containing compound such that the metals accumulate in a phosphide layer after reduction.

21.   The process of Claim 20 further comprising the addition of a Group VB to Group VIII metal to enhance the accumulation of the recovered metals into the metal-containing phosphide layer.

22.   The process of Claim 20 wherein the added metal is iron.

23.   The process of Claim 20 wherein Group VB to Group VIII metals are recovered.

24.   A method of decontaminating spent catalytic cracking catalysts in an ecologically safe manner comprising utilizing the waste as a source of silica in an electrothermal process for producing phosphorus wherein contaminating metals are collected in a ferrophos layer.

25.   The process of Claim 24 wherein the spent catalyst contains vanadium.

26.   The process of Claim 25 wherein the spent catalyst contains nickel.